# EUROPÄISCHE PATENTSCHRIFT

(11) **EP 2 988 980 B1**
(45) Veröffentlichungstag und Bekanntmachung des Hinweises auf die Patenterteilung: **10.05.2017**
(21) Anmeldenummer: 14707943.8
(22) Anmeldetag: 01.03.2014
(51) Int. Cl.: B60W 50/06, F02D 29/06, F02D 41/08, B60W 10/06, B60W 50/00

(54) **KRAFTFAHRZEUG MIT GENERATORLASTABHÄNGIGER MOTORSTEUERUNG**
MOTOR VEHICLE HAVING A GENERATOR LOAD-DEPENDENT ENGINE CONTROL
VÉHICULE AUTOMOBILE ÉQUIPÉ D'UNE COMMANDE DE MOTEUR EN FONCTION DE LA CHARGE DU GÉNÉRATEUR

(30) Priorität: 26.04.2013 DE 102013007277
(43) Veröffentlichungstag der Anmeldung: 02.03.2016
(73) Patentinhaber: Audi AG, 85045 Ingolstadt (DE)
(72) Erfinder: WILDGRUBER, Mario, 85296 Rohrbach (DE); WALDAU, Arthur, 85072 Eichstätt (DE)
(74) Vertreter: Herbst, Matthias Heinz
(86) Internationale Anmeldenummer: PCT/EP2014/000532
(87) Internationale Veröffentlichungsnummer: WO 2014/173478

(56) Entgegenhaltungen:
- EP-A2- 1 478 087
- DE-A1-102010 006 489

## Beschreibung

Die Erfindung betrifft ein Verfahren, durch welches in einem Kraftfahrzeug ein Betriebsparameter eines Verbrennungsmotors eingestellt wird, beispielsweise die Drehzahl des Verbrennungsmotors. Der Verbrennungsmotor treibt dabei einen elektrischen Generator des Kraftfahrzeugs an. Zu der Erfindung gehört auch ein Kraftwagen, in welchem ein Generator über eine Energiemanagementeinheit mit einer Motorsteuerung gekoppelt ist. Die Motorsteuerung regelt dabei einen Betriebsparameter eines Verbrennungsmotors in Abhängigkeit von einer am Generator anliegenden elektrischen Last.

Ein Verfahren und ein Kraftfahrzeug der genannten Art sind beispielsweise aus der DE 10 2008 004 269 A1 bekannt. Danach wird bei einem Kraftfahrzeug, insbesondere einem Lastkraftwagen, ein von einem Motor angetriebener Generator in einem ersten Regelkreis in Bezug auf den Erregerstrom eingestellt, während in einem zweiten Regelkreis eine von dem Generator erzeugte Zwischenkreisspannung überwacht wird und daraus ein Sollwert für die Erregerstromregelung ermittelt wird. Bei Bedarf kann auch vorgesehen sein, eine Leerlaufdrehzahl des den Generator antreibenden Motors zu erhöhen, um eine erforderliche Antriebsleistung für den Generator zur Verfügung stellen zu können.

In der DE 10 2008 002 152 A1 ist ein Verfahren zum Betreiben einer Antriebseinheit eines Fahrzeugs beschrieben, bei dem ein Vorsteuerwert für ein Lastmoment korrigiert wird. Durch das Verfahren wird erreicht, dass auf den oftmals nur bei der Leerlaufdrehzahl für den Verbraucher bekannten Vorsteuerwert zurückgegriffen werden kann und dieser mit Hilfe eines bekannten Wirkungszusammenhangs korrigiert wird, so dass die Lastmomente an höhere Drehzahlen angepasst sind. Durch die Verwendung eines Korrekturwerts erübrigt sich der Bedarf an speicherintensiven Kennfeldern für die drehzahlabhängige Adaption eines Vorsteuerwerts.

In der DE 198 20 395 A1 ist ein im Spannungsregler eines Generators eines Kraftfahrzeugs erzeugtes DF-Signal beschrieben, dass die Auslastung des Generators angibt. Es handelt sich hierbei um ein Generatortastverhältnis für die Einstellung der Ausgangsspannung des Generators durch Anpassung des Erregerstroms mittels einer Zweipunktregelung mit einer Rechteckspannung mit variabler Pulsbreite. Die Generatorspannung sinkt mit steigender abgegebener Ausgangsleistung, die durch eine entsprechende mechanische Antriebsleistung an der Generatorwelle eingebracht werden muss. Die Ausgangsleistung des Generators, genauer sein Wirkungsgrad, ist dabei last- und temperaturabhängig. Aus dem DF-Signal des Spannungsreglers kann deshalb nicht direkt auf die absolute mechanische Antriebsleistung rückgeschlossen werden, die der Generator momentan benötigt. Zeigt das DF-Signal beispielsweise eine Auslastung von 70% an, so kann dies bei zwei unterschiedlichen Temperaturen des Generators bedeuten, dass auch zwei unterschiedliche mechanische Antriebsleistungen von dem Generator benötigt werden.

Für eine genaue Einregelung der von einem Verbrennungsmotor eines Kraftfahrzeugs erzeugten Antriebsleistung für die Generatorwelle des elektrischen Generators kann daher ein Generatormodell zum Ermitteln von Kenngrößen des Generators zugrunde gelegt werden. Ein solches Generatormodell ist beispielsweise aus der DE 10 2005 012 052 A1 bekannt. Mittels eines solchen Generatormodells kann beispielsweise auf der Grundlage von Betriebsparametern des Generators, wie etwa dem beschriebenen Tastverhältnis bei der Erregung (DF-Signal), dem Erregerstrom und der Generatorspannung die von dem Generator benötigte mechanische Antriebsleistung zum Erzeugen der elektrischen Leistung ermittelt werden. Nachteilig bei einem solchen verhältnismäßig komplexen Berechnungsmodell ist, dass aufgrund einer inhärenten Signal- und Rechenlaufzeiten beim Ermitteln der aktuellen Parameterwerte, das Berechnen des Leistungswerts für die Antriebsleistung sowie das anschließende Übertragen des Leistungswerts an die Motorsteuerung stets verzögert zu einer tatsächlichen Laständerung am Generator erfolgt. Dies kann zur Folge haben, dass beispielsweise bei einer Leerlaufregelung eines Verbrennungsmotors durch ein Motorsteuergerät auf Grundlage eines solchen Leistungswerts nicht schnell genug reagiert werden kann, wenn am Generator eine elektrische Last sprunghaft ansteigt. Es kommt dann zu einem Drehzahleinbruch, d. h. die Drehzahl sinkt in einem unerwünscht großen Maß. Schaltet also beispielsweise ein Fahrzeuginsasse im Leerlauf des Kraftfahrzeugs die Klimaanlage an, so kann er eine Verringerung der Drehzahl des Verbrennungsmotors hören. Die Motorsteuerung erhöht die Drehzahl des Verbrennungsmotors erst dann, wenn durch das Generatormodell auch der erhöhte Leistungsbedarf signalisiert wird und daraufhin die Motorsteuerung einen Regelsollwert für eine Drehzahlregelung oder eine Leistungsregelung vergrößert. Ein besonders unerwünschter Effekt entsteht bei einem zyklisch aktivierten elektrischen Verbraucher, wie beispielsweise einem Scheibenwischer. Da auch der vom Generatormodell berechnete aktuelle Leistungswert zyklisch an die Motorsteuerung übermittelt wird, kann es zu einer dynamischen, zyklischen Überlagerung des Leerlaufreglers mit der Generatorbelastung kommen, was zu einer Drehzahlschwingung führen kann. Ein Verfahren ist beispielsweise gemäß dem Oberbegriff des Anspruchs 1 ist aus DE 10 2010 006489 A1 bekannt.

Der Erfindung liegt die Aufgabe zugrunde, in einem Kraftfahrzeug Regelbetrieb zum Einregeln eines Betriebsparameters eines Verbrennungsmotors bereit zu stellen, der gegen Lastsprünge einer elektrischen Last am Generator des Kraftfahrzeugs robust ist.

Die Aufgabe wird durch ein Verfahren gemäß Patentanspruch 1 sowie ein Kraftfahrzeug gemäß Patentanspruch 10 gelöst. Vorteilhafte Weiterbildungen der Erfindung sind durch die Unteransprüche gegeben.

Das erfindungsgemäße Verfahren geht von der beschriebenen Konstellation aus, dass ein Verbrennungsmotor eines Kraftfahrzeugs einen elektrischen Generator des Kraftfahrzeugs antreibt. Durch eine Energiemanagementeinheit wird wiederholt, also beispielsweise zyklisch, aus zumindest einem aktuellen Parameterwert des Generators, etwa der Information über seinen Erregerstrom oder seiner Generatorspannung, ein aktueller Leistungswert einer von dem Generator benötigten mechanischen Antriebsleistung ermittelt. Die benötigte Antriebsleistung entspricht dabei demjenigen Wert, der verhindert, dass die Generatorspannung im elektrischen Bordnetz des Kraftfahrzeugs, in welches der Generator die elektrische Leistung einspeist, unter einen vorbestimmten Mindestwert sinkt. Vorzugsweise wird eine konstante Bordnetzspannung vorgegeben. Durch ein Motorsteuergerät wird dann in Abhängigkeit von dem Leistungswert ein entsprechender Regelsollwert für einen Regelbetrieb des Verbrennungsmotors ermittelt, wobei durch den Regelbetrieb ein Betriebsparameter des Verbrennungsmotors eingeregelt wird, also z.B. dessen Drehzahl oder die von ihm abgegebenen mechanische Leistung.

Zeigt der aktuelle Leistungswert also z.B. an, dass der Generator beispielsweise eine Leistung von 2,1 kW benötigt, so wird ein entsprechender Regelsollwert für den Betriebsparameter des Verbrennungsmotor auf einen Wert eingestellt, welcher in der benötigten Antriebsleistung am Generator resultiert. Aus den Parameterwerten des Generators wird also in der Energiemanagementeinheit der Leistungswert für die Antriebsleitung ermittelt und dieser Leistungswert dann von dem Motorsteuergerät für den Regelung des Verbrennungsmotors genutzt. Wie bereits ausgeführt, kann sich hier das Problem ergeben, dass der aktuelle Leistungswert nur mit einer Verzögerung an den tatsächlichen Lastfall angepasst wird. Bei einem Lastsprung der elektrischen Last am Generator hat dies zur Folge, dass der aktuelle Leistungswert nicht schnell genug an die tatsächlich benötigte Antriebsleistung angepasst ist.

Erfindungsgemäß wird deshalb zusätzlich eine Betriebsgröße des Generators überwacht, die von der am Generator wirkenden elektrischen Last abhängig ist. Ein Lastsprung der elektrischen Last verändert also unmittelbar diese Betriebsgröße. Als besonders geeignete Betriebsgrößen haben sich das DF-Signal des Spannungsreglers des Generators und das Stromstärkesignal des Erregerstroms des Generators erwiesen. Auf der Grundlage einfacher Versuche können aber auch weitere geeignete Betriebsgrößen gefunden werden. Nach dem erfindungsgemäßen Verfahren wird nun nach einem Lastsprung die relative Änderung der Betriebsgröße ermittelt, d. h. ein solcher Wert, der die durch den Lastsprung bewirkte relative Änderung beschreibt. Beispielsweise kann der Wert angeben, dass sich die Betriebsgröße um beispielsweise 20% vergrößert hat. Ein solcher Wert steht unmittelbar nach dem Lastsprung bereit. Seine Berechnung kann ohne die beschriebenen Verzögerungen erfolgen. Deshalb wird nach dem Lastsprung der Regelsollwert für den Regelbetrieb des Verbrennungsmotors zunächst unabhängig von dem (nur langsam adaptierten) Leistungswert der Energiemanagementeinheit und dafür aber in Abhängigkeit von dem Wert der relativen Änderung der überwachten Betriebsgröße verändert, um den Regelsollwert an den Lastsprung anzupassen.

Obwohl es sich bei der überwachten Betriebsgröße um das DF-Signal handeln kann, ergibt sich anders als im Stand der Technik hierbei nicht das Problem, dass der ermittelte, an den Lastsprung angepasste Regelsollwert ungenau wäre. Es wird ja bei dem erfindungsgemäßen Verfahren im Gegensatz zum Stand der Technik nie versucht, von dem DF-Signal auf einen absoluten Leistungswert zu schließen. Stattdessen erfolgt die Anpassung auf Grundlage der relativen Änderung. Die relative Änderung der Betriebsgröße spiegelt eine relative Änderung des Bedarfs an Antriebsleistung des Generators wider, wenn die Temperatur und die anderen Umgebungsverhältnisse nahezu konstant bleiben. Unmittelbar nach einem Lastsprung verändern sich aber die Temperatur und die anderen Umgebungsbedingungen nur unwesentlich. Liegt vor dem Lastsprung also ein genauer Regelsollwert vor, so kann unmittelbar nach dem Lastsprung (insbesondere in einem Zeitraum von weniger als einer Minute, insbesondere weniger als 15 Sekunden) anhand der relativen Änderung der Betriebsgröße des Generators ein verhältnismäßig genauer angepasster Regelsollwert ermittelt werden.

Die Erfindung weist somit den Vorteil auf, dass unmittelbar nach einem Lastsprung ein an den Lastsprung angepasster Regelsollwert ohne die beschriebene kritische Verzögerung bereitsteht, der ausreichend genau ist, um den Betriebsparameter des Verbrennungsmotors an den aktuellen Leistungsbedarf des Generators im Regelbetrieb anzupassen.

Die Motorsteuerung kann hier für den Regelbetrieb eine an sich beliebige Regelung durchführen, insbesondere als Betriebsparameter des Verbrennungsmotors eine Motordrehzahl und/oder eine Motorleistung und/oder ein Motordrehmoment einregeln. Das Einregeln der Antriebsleistung des Motors weist den besonderen Vorteil auf, dass unmittelbar der aktuelle Leistungswert der Energiemanagementeinheit als der Regelsollwert übernommen werden kann. Eventuell müssen nur noch Reibverluste und die von anderen Komponenten benötigte Leistung eingerechnet werden. Insbesondere wenn auf Grundlage des Verfahrens durch das Motorsteuergerät eine Leerlaufregelung durchgeführt wird, kann der aktuelle Leistungswert direkt (zuzüglich der Reibverluste) als Regelsollwert übernommen werden, da keine anderen Komponenten angetrieben werden müssen.

Die Berechnung des aktuellen Leistungswerts durch die Energiemanagementeinheit kann in der beschriebenen Weise auf der Grundlage eines Generatormodells erfolgen, wie es an sich aus dem Stand der Technik bekannt ist. Das Generatormodell kann dabei sehr komplex sein, da nun eine Zeitverzögerung keine große Rolle mehr spielt. Dies weist den besonderen Vorteil auf, dass ein sehr genauer Regelsollwert mittels des Generatormodells ermittelt werden kann. Die durch das Generatormodell wegen dessen verzögerter Leistungswertberechnung verursachten Nachteile treten bei dem erfindungsgemäßen Verfahren dabei nicht auf, da der Regelsollwert bei Bedarf nach einem Lastsprung mit einer unwesentlichen Verzögerung durch den Wert der relativen Änderung der überwachten Betriebsgröße schnell genug angepasst wird.

Wie bereits ausgeführt, kann der Wert der relativen Änderung beispielsweise eine prozentuale Änderung der Betriebsgröße beschreiben. In diesem Fall ergibt sich eine vorteilhafte Weiterbildung, wenn der angepasste Regelsollwert einfach durch Multiplizieren des Werts der relativen Änderung mit einem vor dem Lastsprung oder während des Lastsprungs ermittelten Regelsollwert berechnet wird. Weist also der Regelsollwert vor dem Lastsprung einen Wert von 2.100 Watt auf und ergibt sich eine relative Änderung der Antriebsleistung von plus 20% (Leistungssteigerung), so muss der Regelsollwert einfach mit dem Faktor 1,2 multipliziert werden, um den angepassten Regelsollwert zu erhalten. Wird der Regelsollwert aus Zwischengrößen berechnet, weil etwa eine Drehzahlregelung realisiert ist anstelle einer Leistungsregelung, so kann auch eine dieser Zwischengrößen mit dem Wert für die relative Änderung multipliziert werden.

In vorteilhafter Weise wird ein Lastsprung dadurch erkannt, dass der Wert der relativen Änderung betragsmäßig größer als ein vorbestimmter Schwellenwert ist. Hierdurch kann robust bestimmt werden, wann der Regelsollwert aus dem aktuellen genauen Leistungswert der Energiemanagementeinheit und wann aus dem Wert der relativen Änderung eingestellt werden sollte.

Nach einem Lastsprung muss in zuverlässiger Weise wieder zurück auf einen Regelbetrieb in Abhängigkeit von dem aktuellen Leistungswert der Energiemanagementeinheit zurückgeschaltet werden. Eine Ausführungsform des Verfahrens sieht hierzu vor, dass wieder in Abhängigkeit von dem aktuellen Leistungswert der Energiemanagementeinheit geregelt wird, falls eine vorbestimmte Zeitdauer seit Erkennen des Lastsprungs vergangen ist. Eine alternative Ausführungsform sieht vor, dass eine Differenz zwischen dem angepassten Regelsollwert und dem aus dem aktuellen Leistungswert der Energiemanagementeinheit ermittelten Regelsollwert überprüft wird und dann letzterer der Regelung zugrunde gelegt wird, falls die Differenz betragsmäßig kleiner als ein vorbestimmter Schwellenwert ist. Die erste Variante stellt zuverlässig sicher, dass wieder in den normalen Regelbetrieb übergegangen wird, wenn die Zeitdauer vergangen ist. Die zweite Variante ermöglicht einen besonders "geschmeidigen" Übergang, da sich zum Umschaltzeitpunkt nur ein durch den Schwellenwert bestimmter kleiner Unterschied im Regelverhalten ergibt.

Um besonders geringe Verzögerungen beim Anpassen des Regelsollwerts zu erhalten, sieht eine Ausführungsform des Verfahrens vor, dass die Energiemanagementeinheit einen aktuellen Wert der überwachten Betriebsgrößen (z.B. das DF-Signal) zu dem Motorsteuergerät unverändert durchleitet (auch als durchrouten bezeichnet) und dann durch das Motorsteuergerät selbst der angepasste Regelsollwert ermittelt wird.

Wie bereits ausgeführt gehört zu der Erfindung auch ein Kraftfahrzeug. Dieses ist dazu ausgelegt, ein Verfahren nach einem der vorhergehenden Ansprüche durchzuführen. Bevorzugt ist das Kraftfahrzeug als Personenkraftwagen ausgestaltet.

Im Folgenden ist die Erfindung noch einmal anhand eines konkreten Ausführungsbeispiels erläutert. Hierzu zeigt:

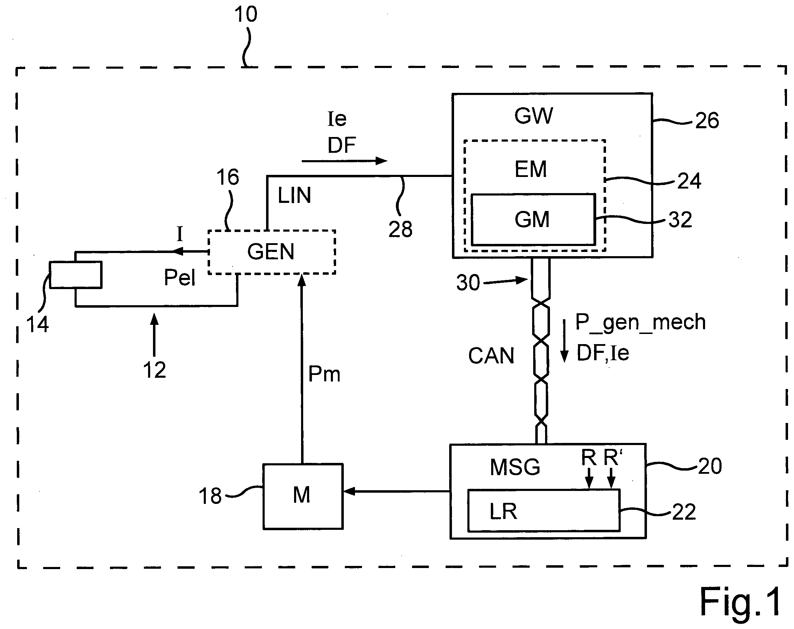

- Fig. 1: eine schematische Darstellung einer bevorzugten Ausführungsform des erfindungsgemäßen Kraftwagens und
- Fig.: 2 ein Diagramm mit schematisierten zeitlichen Verläufen mehrerer elektrischer und mechanischer Größen, wie sie sich einmal bei einem Regelbetrieb gemäß dem Stand der Technik und einmal bei einem Regelbetrieb bei einer Verwendung einer Ausführungsform des erfindungsgemäßen Verfahrens ergeben.

Bei den im Folgenden erläuterten Ausführungsbeispielen stellen die beschriebenen Komponenten der Ausführungsformen und die beschriebenen Schritte des Verfahrens jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In Fig. 1 ist ein Kraftfahrzeug 10 gezeigt, bei dem es sich beispielsweise um einen Personenkraftwagen handeln kann. Das Kraftfahrzeug 10 weist ein elektrisches Bordnetz 12 auf, über welches ein oder mehrere elektrische Verbraucher 14 mit elektrischer Leistung von einem elektrischen Generator 16 (GEN) versorgt werden. Der Generator 16 kann von einem Verbrennungsmotor 18 (M) in an sich bekannter Weise z.B. über eine Welle oder einen Riemen angetrieben werden. Hierbei überträgt der Verbrennungsmotor 18 mechanische Leistung Pm an den Generator 16. Wenn von den Verbrauchern 14 einer an- oder abgeschaltet wird, so ändert sich sprunghaft der Wert der von dem Generator 16 in das Bordnetz 12 abgegebenen elektrischen Leistung Pel.

Es kann hierbei vorgesehen sein, dass der Generator 16 eine Bordnetzspannung im Bordnetz 12 auf einen konstanten Wert regelt, so dass bei einer Veränderung der von den Verbrauchern 14 bezogenen elektrischen Leistung Pel eine entsprechende Veränderung des elektrischen Bordnetzstroms I bewirkt wird. Die von den Verbrauchern 14 von dem Generator 16 bezogene elektrische Leistung Pel wird hier auch als elektrische Last bezeichnet. Eine Veränderung der elektrischen Last, d. h. eine Veränderung im Wert der elektrischen Leistung Pel, bewirkt eine Veränderung des Drehmoments, das von dem Verbrennungsmotor 18 am Generator 16 aufzubringen ist, wenn die Drehzahl des Verbrennungsmotors 18 konstant bleiben soll.

Für die weitere Erläuterung des Ausführungsbeispiels sei angenommen, dass sich das Kraftfahrzeug 10 im Leerlauf befindet. Die von dem Verbrennungsmotor 18 abgegebene mechanische Leistung Pm entspricht dann (abzüglich von nicht-linearen Effekten und Reibungsverlusten) der vom Generator 16 aufgenommenen mechanischen Leistung, die von diesem in die elektrische Leistung Pel umgewandelt wird. Schaltet nun ein Benutzer in dem Kraftfahrzeug 10 einen der elektrischen Verbraucher 14 an, während sich das Kraftfahrzeug 10 im Leerlauf befindet, so erzeugt dies innerhalb kurzer Zeit, z.B. in weniger als 1s, eine Veränderung der bezogenen elektrischen Leistung Pel, d. h. einen Lastsprung. Dieser muss von dem Verbrennungsmotor 18 kompensiert werden, wenn dessen Drehzahl nicht sinken soll. Insbesondere im Leerlauf des Verbrennungsmotors 18 kann dies sonst dazu führen, dass der Verbrennungsmotor 18 ausgeht, d. h. "abgewürgt" wird.

Die vom Verbrennungsmotor 18 abgegebene mechanische Leistung Pm wird durch ein Motorsteuergerät 20 (MSG) eingeregelt, welches den Verbrennungsmotor 18 in an sich bekannter Weise ansteuert. Für den beschriebenen Leerlaufbetrieb kann das Motorsteuergerät 20 eine Leerlaufregelung 22 (LR) aufweisen. Der Leerlaufregelung 22 wird z.B. durch das Motorsteuergerät 20 selbst ein Regelsollwert R vorgegeben, welcher im Leerlauf die vom Generator 16 benötigte mechanische Leistung Pm widerspiegelt. Die Leerlaufregelung 22 regelt dann den Verbrennungsmotor 18 auf diesen Regelsollwert R ein, so dass der Verbrennungsmotor 18 die benötigte mechanische Leistung Pm tatsächlich abgibt.

Der Regelsollwert R kann nur berechnet werden, wenn die momentan vom Generator 16 benötigte mechanische Leistung bekannt ist. Hierzu wird der Generator 16 von einer Energiemanagementeinheit 24 (EM) überwacht. Die Energiemanagementeinheit 24 kann beispielsweise in einem Gateway 26 (GW) eines Bussystems des Kraftfahrzeugs 10 bereitgestellt sein, welches über einen Buszweig 28 mit dem Generator 16 und über einen anderen Buszweig 30 mit dem Motorsteuergerät 20 verbunden sein kann. Bei dem Buszweig 28 kann es sich beispielsweise um denjenigen eines LIN-Busses (LIN - Local Interconnect Network), bei dem Buszweig 30 um denjenigen eines CAN-Busses (CAN - Controller Area Network) handeln.

Die Energiemanagementeinheit 24 kann beispielsweise ein Softwaremodul sein, das durch eine Prozessoreinheit des Gateway 26 ausgeführt wird. Die Energiemanagementeinheit 24 kann über den Buszweig 28 zu vorbestimmten Zeiten aktuelle Werte zu Betriebsparametern des Generators 16 empfangen. Beispielsweise kann die Energiemanagementeinheit 24 so aktuelle Parameterwerte zu einem Erregerstrom le und einer Spannungsregelung des Generators 16 empfangen. Als Parameterwert der Spannungsregelung kann z.B. das DF-Signal eines DF-Monitors (DFM) ermittelt werden.

Die Energiemanagementeinheit 24 kann ein Generatormodell 32 umfassen, welches anhand der empfangenen Parameterwerte die aktuell vom Generator 16 benötigte mechanische Leistung zum Bereitstellen der elektrischen Leistung Pel als Schätzwert angibt. Dieser Schätzwert der mechanischen Leistung P_gen_mech wird von der Energiemanagementeinheit 24 über den Buszweig 30 an das Motorsteuergerät 20 übertragen, welches daraus den Regelsollwert R ermittelt. Handelt es sich bei der Leerlaufregelung 22 um eine Leistungsregelung, so kann als der Regelsollwert R gleich die geschätzte Leistung P_gen_mech verwendet werden. Handelt es sich bei der Leerlaufregelung 22 um eine Drehzahlregelung oder Drehmomentregelung, so bildet P_gen_mech eine Zwischengröße und kann über entsprechende Umrechnungsfaktoren, die an sich bekannt sind, in ein entsprechender Regelsollwert R umgewandelt werden.

Aufgrund von Mess- und Übertragungsverzögerungen beim Erfassen der Parameterwerte le und DF und der Übertragung der geschätzten Leistung P_gen_mech sowie aufgrund von mathematischen Mittelungen der zeitlichen Folge aktueller Parameterwerte innerhalb des Generatormodells 32 zur Kompensation von Rauscheffekten, ergibt sich eine Zeitverzögerung T bei der Berechnung des geschätzten Leistungswerts P_gen_mech. Dies führt dazu, dass bei einer Veränderung der elektrischen Last im Bordnetz 12 ein entsprechender Regelsollwert R und damit eine entsprechend veränderte mechanische, vom Verbrennungsmotor 18 abgegebene Leistung Pm erst mit der Zeitverzögerung T am Generator 16 zur Verfügung steht, falls ausschließlich der geschätzte Leistungswert P_gen_mech bereitsteht. Dies kann zu einer unerwünschten Veränderung einer Drehzahl n des Verbrennungsmotors 18 führen. Bei dem Kraftfahrzeug 10 ist dies aber wirkungsvoll verhindert. Hierzu ist das Kraftfahrzeug 10 dazu ausgelegt, eine Ausführungsform des erfindungsgemäßen Verfahrens durchzuführen.

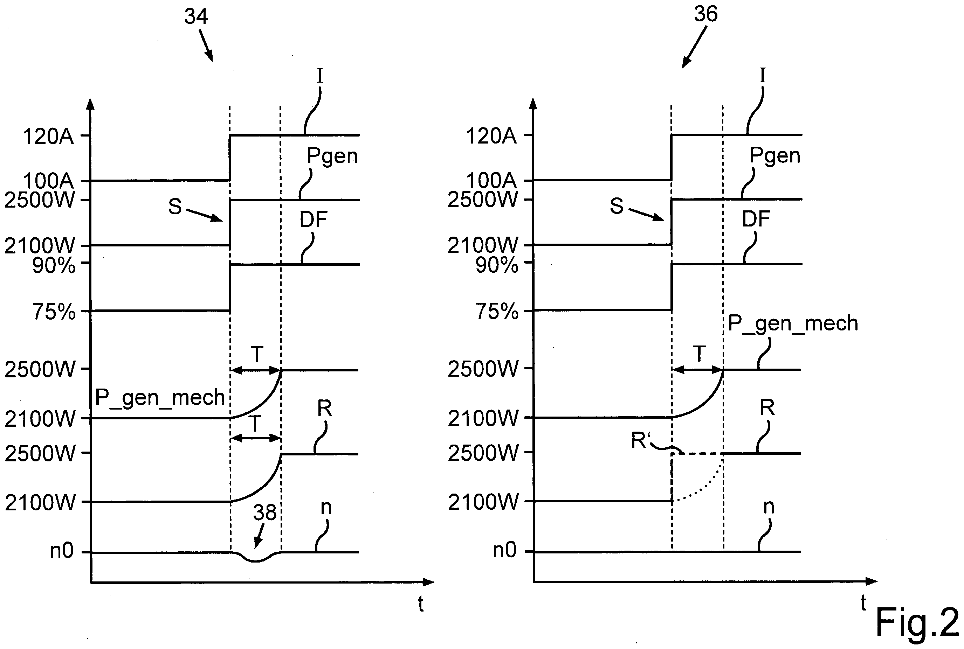

Im Folgenden ist anhand von Fig. 1 und Fig. 2 erläutert, wie bei einem Lastsprung, wie er beispielsweise Einschalten eines der Verbraucher 14 im Bordnetz 12 entsteht, also einer sprunghaften Vergrößerung der Leistung Pel, eine unerwünscht große Veränderung der Drehzahl n des Verbrennungsmotors 18 vermieden ist. In Fig. 2 sind hierzu in zwei Teildiagrammen 34, 36 über der Zeit t zeitliche Verläufe von Betriebsgrößen des Kraftfahrzeugs 10 aufgetragen. Das Teildiagramm 34 zeigt dabei typische Verläufe, wie sie sich im Stand der Technik ergeben, wenn ausschließlich die geschätzte Leistung P_gen_mech der Motorregelung zugrundegelegt wird. Das Teildiagramm 36 zeigt Verläufe, wie sie sich gemäß der Ausführungsform des erfindungsgemäßen Verfahrens ergeben.

Beiden Teildiagrammen 34, 36 liegt als Ausgangssituation zugrunde, dass einer der Verbraucher 14 eingeschaltet wird und hierdurch ein Lastsprung im Bordnetz 12 verursacht wird, durch welchen der Bordnetzstrom I (bei konstant geregelter Bordnetzspannung) von beispielsweise 100A auf 120A sprunghaft steigt, so dass ein Lastsprung S vorliegt. Die vom Generator 16 zum Bereitstellen der entsprechenden elektrischen Leistung Pel im Bordnetz 12 benötigte mechanische Leistung Pgen steige in dem Beispiel hierbei von 2.100 Watt auf 2.500 Watt.

Die Spannungssteuerung des Generators 16 erkennt diesen erhöhten Leistungsbedarf sofort an der benötigten Veränderung der Spannungsregelung. Das von der Spannungsregelung erzeugte DF-Signal steigt entsprechend schnell von einem Wert von beispielsweise 75% auf einen Wert von 90%. Dass das DF-Signal bei einer Leistung von 2.100 Watt eine Auslastung von 75% anzeigt, ist nur bei dem aktuellen Betriebszustand des Generators 16 so, wenn der Generator 16 eine bestimmte Temperatur und einen bestimmten Erregerstrom le aufweist. Aus diesem Grund kann ausschließlich auf der Grundlage des DF-Signals kein Rückschluss auf die benötigte Generatorleistung Pgen gemacht werden. Deshalb kann auf Grundlage des DF-Signals nicht unmittelbar der Regelsollwert R für die Leerlaufregelung 22 berechnet werden, um so den Verbrennungsmotor 18 entsprechend hoch zu regeln, damit er die benötigte Generatorleistung Pgen als Motorleistung Pm tatsächlich ausgibt.

Um für eine genaue Regelung einen geeigneten Regelsollwert R zu erhalten, muss auf Grundlage der aktuellen Parameterwerte des Generators 16 deshalb die benötigte Generatorleistung Pgen als geschätzter Leistungswert P_gen_mech mittels des Generatormodells 32 durch die Energiemanagementeinheit 24 berechnet werden. Wie bereits ausgeführt, kann der durch den Lastsprung S verursachte neue Wert (Pgen = 2.500 Watt in dem Beispiel) nur mit der Zeitvergrößerung T durch das Generatormodell 32 ermittelt werden. Entsprechend steigt auch der Regelsollwert R erst mit einer Zeitvergrößerung T auf den gewünschten Wert. Der Verbrennungsmotor 18 kann während dieses Übergangszeitraums, wie er sich durch die Zeitvergrößerung T ergibt, nicht auf den gewünschten Solldrehzahlwert n0 gehalten werden, sondern es gibt einen Drehzahleinbruch 38 im Teildiagramm 34 (Stand der Technik).

Bei dem Kraftfahrzeug 10 ist dies vermieden. In dem Teildiagramm 36 ist gezeigt, dass sich bei dem Kraftfahrzeug 10 dieselben zeitlichen Verläufe für den Bordnetzstrom I, die benötigte Generatorleistung Pgen, das DF-Signal und die vom Generatormodell 32 berechnete geschätzte Leistung P_gen_mech ergeben können. Anders als im Stand der Technik wird aber beispielsweise durch das Motorsteuergerät 20 unmittelbar nach dem Lastsprung S, also noch innerhalb der Zeitverzögerung T ein angepasster Regelsollwert R' berechnet und dieser nach dem Lastsprung S der Leerlaufregelung 22 mit einer sehr viel geringeren Zeitverzögerung als der Zeitverzögerung T übergeben. Die Leerlaufregelung 22 regelt deshalb die vom Verbrennungsmotor 18 abgegebene mechanische Leistung Pm sofort auf den benötigten Wert der Generatorleistung Pgen ein. Entsprechend bleibt die Drehzahl n des Verbrennungsmotors 18 konstant oder nahezu konstant. Insbesondere kommt es nicht zu dem Drehzahleinbruch 38.

Damit dies ermöglicht ist, wird neben dem geschätzten Leistungswert P_gen_mech zur Ermittlung des aktuell anliegenden Lastniveaus Pel zusätzlich beispielsweise das Generatorlastsignal DF (in %) von der Energiemanagementeinheit 24 (oder dem Gateway 26 allgemein) zu dem Motorsteuergerät 20 durchgeroutet. Anhand des Generatorlastsignals DF kann in dem Motorsteuergerät 20 eine relative Lastveränderung des aktuellen Lastniveaus mit geringer Zeitverzögerung erkannt werden. Da sich während eines Lastsprungs die Temperatur des Generators 16 nicht signifikant ändern kann, kann anhand dieser relativen Änderung und dem Wert der Generatorleistung P_gen_mech, der vor dem Lastsprung bei nahezu konstanter Last Pel durch das Generatormodell 32 sehr genau ermittelt wurde, der Regelsollwert schnell angepasst werden. Hierzu wird berechnet, welche aktuelle Generatorlast Pgen (hier 2.500 Watt) sich durch den Lastsprung S ergeben hat. Zum Zeitpunkt kurz vor dem Lastsprung ist die tatsächliche Generatorlast als absoluter Wert (2100 Watt) und die Leerlaufdrehzahl auch stabil ausgeregelt. Die tatsächliche Generatorlast beträgt in dem Beispiel P_gen_mech = 2.100 Watt. Während der Lastzuschaltung von 20 Ampere (siehe die Graphen in Fig. 2) steigt das DF-Signal nahezu sofort entsprechend an. Im Beispiel steigt es von 0,75 auf 0,9. Dies entspricht einer relativen Veränderung von +20%. Ebenso springt die tatsächlich an der Welle des Generators aufgenommene mechanische Leistung Pgen um etwa 20% (nicht lineare Effekte im Generator werden hier vernachlässigt). Achtet nun das Motorsteuergerät parallel auf die Generatorlastveränderung, wie sie an dem DF-Signal zumindest in relativer Veränderung ermittelt werden kann, so kann intern durch das Motorsteuergerät 20 der vor dem Lastsprung ermittelte Wert P_gen_mech um die ermittelten 20% vergrößert werden, d. h. nach dem Lastsprung ergibt sich P_gen_mech = 2.100 Watt x 1,2 = 2.500 Watt. So kann die Leerlaufregelung 22 mit dem an den Lastsprung S angepassten Regelsollwert R' betrieben werden und so kein oder nur ein geringer Drehzahleinbruch der Drehzahl n ist die Folge.

Im Beispiel ist die Regelung für den Fall einer Leerlaufregelung 22 beschrieben. Das erfindungsgemäße Verfahren kann aber auch jede andere Regelung (also auch bei Fahrt des Kraftfahrzeugs 10 mit eingekopeltem Verbrennungsmotor 18) verwendet werden. Anstelle des DF-Signals kann auch beispielsweise der aktuelle Wert des Erregerstroms le des Generators 16 an das Motorsteuergerät 20 durchgeroutet werden.

## Patentansprüche

1. Verfahren zum Einstellen eines Betriebsparameters eines Verbrennungsmotors (18) in einem Kraftfahrzeug (10), wobei
- durch den Verbrennungsmotor (18) ein elektrischer Generator (16) des Kraftfahrzeugs (10) angetrieben wird,
- durch eine Energiemanagementeinheit (24) wiederholt aus zumindest einem aktuellen Parameterwert des Generators (16) ein aktueller Leistungswert (P_gen_mech) einer von dem Generator (16) benötigten mechanischen Antriebsleistung (Pgen) ermittelt wird,
- durch ein Motorsteuergerät (20) in Abhängigkeit von dem Leistungswert (P_gen_mech) der Energiemanagementeinheit (24) ein Regelsollwert (R) für einen Regelbetrieb zum Einregeln des Betriebsparameters (Pm) ermittelt wird,
**dadurch gekennzeichnet, dass**
eine Betriebsgröße (DF, le) des Generators (16), die von einer am Generator (16) wirkenden elektrischen Last (Pel) abhängig ist, überwacht wird und nach einem Lastsprung (S) der elektrischen Last (Pel)
a) ein Wert einer durch den Lastsprung (S) bewirkten relativen Änderung der Betriebsgröße (DF, le) ermittelt wird und
b) ein an den Lastsprung (S) angepasster Regelsollwert (R') für den Regelbetrieb unabhängig von dem aktuellen Leistungswert (P_gen_mech) der Energiemanagementeinheit (24) und in Abhängigkeit von dem Wert der relativen Änderung der überwachten Betriebsgröße (DF, le) ermittelt wird.

2. Verfahren nach Anspruch 1, wobei die überwachte Betriebsgröße des Generators ein DF-Signal eines Spannungsreglers des Generators (16) und/oder ein Stromstärkesignal eines Erregerstroms des Generators (16) umfasst.

3. Verfahren nach Anspruch 1 oder 2, wobei als der Betriebsparameter des Verbrennungsmotors (18) eine Motordrehzahl (n) und/oder eine Motorleistung (Pm) und/oder ein Motordrehmoment eingeregelt wird.

4. Verfahren nach einem der vorhergehenden Ansprüche, wobei durch das Motorsteuergerät (20) eine Leerlaufregelung (22) durchgeführt wird.

5. Verfahren nach einem der vorhergehenden Ansprüche, wobei der aktuelle Leistungswert (P_gen_mech) der Energiemanagementeinheit (24) aus dem zumindest einen aktuellen Parameterwert durch ein Generatormodell (32) berechnet wird, welches den Generator (16) nachbildet.

6. Verfahren nach einem der vorhergehenden Ansprüche, wobei der angepasste Regelsollwert (R') durch Multiplizieren des Werts der relativen Änderung mit einem vor dem Lastsprung (S) oder während des Lastsprungs (N) ermittelten Regelsollwert (R) oder mit einer diesem Regelsollwert (R) zugrundegelegten Zwischengröße (P_gen_mech) berechnet wird.

7. Verfahren nach einem der vorhergehenden Ansprüche, wobei ein Lastsprung (S) dadurch erkannt wird, dass Wert der relativen Änderung betragsmäßig größer als ein vorbestimmter Schwellenwert ist.

8. Verfahren nach einem der vorhergehenden Ansprüche, wobei dem Regelbetrieb anstelle des angepassten Regelsollwerts (R') wieder der in Abhängigkeit von dem aktuellen Leistungswert (P_gen_mech) der Energiemanagementeinheit (24) ermittelte Regelsollwert (R) zugrunde gelegt wird, falls a) eine vorbestimmte Zeitdauer (T) seit Erkennen des Lastsprungs (S) vergangen ist oder b) eine Differenz zwischen dem angepassten Regelsollwert (R') und dem in Abhängigkeit von dem aktuellen Leistungswert (P_gen_mech) der Energiemanagementeinheit (24) ermittelten Regelsollwert (R) betragsmäßig kleiner als ein vorbestimmter Schwellenwert ist.

9. Verfahren nach einem der vorhergehenden Ansprüche, wobei die Energiemanagementeinheit (24) einen aktuellen Wert der Betriebsgröße (DF) zum dem Motorsteuergerät (20) unverändert durchleitet und durch das Motorsteuergerät (20) der angepasste Regelsollwert (R') ermittelt wird.

10. Kraftfahrzeug (10) mit einer Energiemanagementeinheit (24) zum Abstimmen eines Betriebs eines elektrischen Generators (16) und eines diesen antreibenden Verbrennungsmotors (18) sowie mit einem Motorsteuergerät (20) zum Einregeln eines Betriebsparameters des Verbrennungsmotors (18), **dadurch gekennzeichnet, dass**
das Kraftfahrzeug (10) dazu ausgelegt ist, ein Verfahren nach einem der vorhergehenden Ansprüche durchzuführen.

## Claims

1. Method for adjusting an operating parameter of an internal combustion engine (18) in a motor vehicle (10), wherein
- an electrical generator (16) of the motor vehicle (10) is driven by the internal combustion engine (18),
- a current power value (P_gen_mech) of a mechanical drive power (Pgen) required by the generator (16) is repeatedly determined from at least one current parameter value of the generator (16) by an energy management unit (24),
- on the basis of the power value (P_gen_mech) of the energy management unit (24) a regulating setpoint value (R) for regulating operation to regulate the operating parameter (Pm) is determined by an engine control device (20),
**characterised in that**
an operating quantity (DF, le) of the generator (16), which is dependent on an electrical load (Pel) acting at the generator (16), is monitored, and, after a load jump (S) of the electrical load (Pel),
a) a value of a relative change in the operating quantity (DF, le), caused by the load jump (S), is determined and
b) a regulating setpoint value (R') for the regulating operation, which is adapted to the load jump (S), is determined independently of the current power value (P_gen_mech) of the energy management unit (24) and on the basis of the value of the relative change in the monitored operating quantity (DF, le).

2. Method according to claim 1, wherein the monitored operating quantity of the generator comprises a DF signal of a voltage regulator of the generator (16) and/or a current strength signal of an excitation current of the generator (16).

3. Method according to claim 1 or 2, wherein an engine speed (n) and/or an engine power (Pm) and/or an engine torque is regulated as the operating parameter of the internal combustion engine (18).

4. Method according to any one of the preceding claims, wherein idling regulation (22) is carried out by the engine control device (20).

5. Method according to any one of the preceding claims, wherein the current power value (P_gen_mech) of the energy management unit (24) is calculated from the at least one current parameter value by a generator model (32) which represents the generator (16).

6. Method according to any one of the preceding claims, wherein the adapted regulating setpoint value (R') is calculated by multiplying the value of the relative change by a regulating setpoint value (R) determined before the load jump (S) or during the load jump (N) or by an intermediate quantity (P_gen_mech) based on this regulating setpoint value (R).

7. Method according to any one of the preceding claims, wherein a load jump (S) is detected by the fact that the value of the relative change is greater in magnitude than a predetermined threshold value.

8. Method according to any one of the preceding claims, wherein instead of the adapted regulating setpoint value (R'), the regulating operation is again based on the regulating setpoint value (R) determined on the basis of the current power value (P_gen_mech) of the energy management unit (24) if a) a predetermined time (T) has elapsed since detection of the load jump (S) or b) a difference between the adapted regulating setpoint value (R') and the regulating setpoint value (R) determined on the basis of the current power value (P_gen_mech) of the energy management unit (24) is smaller in magnitude than a predetermined threshold value.

9. Method according to any one of the preceding claims, wherein the energy management unit (24) transmits a current value of the operating quantity (DF) unchanged to the motor control device (20), and the adapted setpoint value (R') is determined by the engine control device (20).

10. Motor vehicle (10) having an energy management unit (24) for adjusting operation of an electrical generator (16) and of an internal combustion engine (18) driving the latter, and having an engine control device (20) for regulating an operating parameter of the internal combustion engine (18),
**characterised in that**
the motor vehicle (10) is configured to carry out a method according to any one of the preceding claims.

## Revendications

1. Procédé pour régler un paramètre de fonctionnement d'un moteur à combustion interne (18) dans un véhicule automobile (10), dans lequel
- un générateur électrique (16) du véhicule automobile (10) est entraîné par le moteur à combustion interne (18),
- une valeur de puissance actuelle (P_gen_mech) d'une puissance motrice mécanique (Pgen) nécessaire au générateur (16) est déterminée de manière répétée par une unité gestionnaire d'énergie (24) à partir d'au moins une valeur de paramètre actuelle du générateur (16),
- une valeur de consigne réglée (R) pour un fonctionnement de réglage destiné à régler le paramètre de fonctionnement (Pm) est déterminée par un appareil de commande de moteur (20) en fonction de la valeur de puissance (P_gen_mech) de l'unité gestionnaire d'énergie (24),
**caractérisé en ce qu'**une grandeur de fonctionnement (DF, le) du générateur (16), laquelle dépend d'une charge électrique (Pel) agissant au niveau du générateur (16), est surveillée et, après une variation brusque de charge (S) de la charge électrique (Pel),
a) une valeur d'une variation relative, provoquée par la variation brusque de charge (S), de la grandeur de fonctionnement (DF, le) est déterminée et
b) une valeur de consigne réglée (R') adaptée à la variation brusque de charge (S) pour le fonctionnement de réglage est déterminée indépendamment de la valeur de puissance actuelle (P_gen_mech) de l'unité gestionnaire d'énergie (24) et en fonction de la valeur de la variation relative de la grandeur de fonctionnement (DF, le) surveillée.

2. Procédé selon la revendication 1, dans lequel la grandeur de fonctionnement surveillée du générateur comprend un signal DF d'un régulateur de tension du générateur (16) et/ou un signal d'intensité de courant d'un courant d'excitation du générateur (16).

3. Procédé selon la revendication 1 ou 2, dans lequel une vitesse de rotation de moteur (n) et/ou une puissance de moteur (Pm) et/ou un couple de moteur sont réglés en tant que paramètre de fonctionnement du moteur à combustion interne (18).

4. Procédé selon l'une des revendications précédentes, dans lequel une régulation à vide (22) est effectuée par l'appareil de commande de moteur (20).

5. Procédé selon l'une des revendications précédentes, dans lequel la valeur de puissance actuelle (P_gen_mech) de l'unité gestionnaire d'énergie (24) est calculée à partir de l'au moins une valeur de paramètre actuelle par un modèle de générateur (32) qui simule le générateur (16).

6. Procédé selon l'une des revendications précédentes, dans lequel la valeur de consigne réglée adaptée (R') est calculée en multipliant la valeur de la variation relative par une valeur de consigne réglée (R) déterminée avant la variation brusque de charge (S) ou pendant la variation brusque de charge (N) ou par une grandeur intermédiaire (P_gen_mech) à la base de cette valeur de consigne réglée (R).

7. Procédé selon l'une des revendications précédentes, dans lequel une variation brusque de charge (S) est détectée par le fait que la valeur de la variation relative est supérieure en valeur absolue à une valeur de seuil prescrite.

8. Procédé selon l'une des revendications précédentes, dans lequel la valeur de consigne réglée (R) déterminée en fonction de la valeur de puissance actuelle (P_gen_mech) de l'unité gestionnaire d'énergie (24) est à nouveau prise comme base du fonctionnement de réglage à la place de la valeur de consigne réglée adaptée (R') si a) une durée prescrite (T) s'est écoulée depuis la détection de la variation brusque de charge (S) ou b) une différence entre la valeur de consigne réglée adaptée (R') et la valeur de consigne réglée (R) déterminée en fonction de la valeur de puissance actuelle (P_gen_mech) de l'unité gestionnaire d'énergie (24) est inférieure en valeur absolue à une valeur de seuil prescrite.

9. Procédé selon l'une des revendications précédentes, dans lequel l'unité gestionnaire d'énergie (24) transmet sans changement une valeur actuelle de la grandeur de fonctionnement (DF) à l'appareil de commande de moteur (20) et la valeur de consigne réglée adaptée (R') est déterminée par l'appareil de commande de moteur (20).

10. Véhicule automobile (10) avec une unité gestionnaire d'énergie (24) pour ajuster un fonctionnement d'un générateur électrique (16) et d'un moteur à combustion interne (18) entraînant celui-ci ainsi qu'avec un appareil de commande de moteur (20) pour régler un paramètre de fonctionnement du moteur à combustion interne (18), **caractérisé en ce que** le véhicule automobile (10) est conçu pour mettre en oeuvre un procédé selon l'une des revendications précédentes.
